# DEMANDE DE BREVET EUROPEEN

(11) **EP 3 045 401 A1**
(43) Date de publication de la demande: **20.07.2016**
(21) Numéro de dépôt: 16150947.6
(22) Date de dépôt: 12.01.2016
(51) Int. Cl.: B65D 23/08, C03C 17/00, C03C 17/32, C03C 17/34, C09D 127/18, C09D 175/04

(54) **RECIPIENT RECOUVERT D'UN REVETEMENT DE PROTECTION ET DE RETENTION, KIT DE FABRICATION D'UN REVETEMENT DE PROTECTION ET DE RETENTION ET PROCEDE DE FABRICATION AFFERENT**

(30) Priorité: 15.01.2015 FR 1550325
(71) Demandeur: SGD S.A., 92800 Puteaux (FR)
(72) Inventeur: PERROT, Carine, 76260 ETALONDES (FR)
(74) Mandataire: Weber, Jean-François

(57) **Abrégé**

Récipient recouvert d'un revêtement de protection et de rétention, kit de fabrication d'un revêtement de protection et de rétention et procédé de fabrication afférent.

L'invention concerne un récipient (1) comprenant une paroi en verre (2) délimitant une cavité d'accueil (3) pour une substance fluide, ledit récipient (1) comprenant un revêtement (5) de protection et de rétention qui recouvre extérieurement ladite paroi en verre (2), ledit récipient (1) étant caractérisé en ce que ledit revêtement (5) de protection et de rétention est un revêtement multicouche transparent qui comprend une couche inférieure (5A) recouvrant la paroi en verre (2) et une couche supérieure (5B) recouvrant ladite couche inférieure (5A), ladite couche inférieure (5A) étant formée d'un matériau à base de polyuréthane tandis que ladite couche supérieure (5B) est formée d'un matériau à base de polyuréthane fonctionnalisé par un composé à base d'un fluoropolymère.

Corps creux.

## Description

La présente invention se rapporte au domaine général des corps creux, et plus précisément des récipients du genre flacons, pourvus d'une surface en verre et utilisables dans différents secteurs industriels, en particulier dans le secteur de l'emballage et du conditionnement de substances liquides, pâteuses, ou pulvérulentes, comme par exemple les substances pharmaceutiques, cosmétiques, ou alimentaires. L'invention concerne également le domaine technique du traitement des récipients en verre, dans un but fonctionnel et/ou décoratif, notamment dans les secteurs pharmaceutique, cosmétique et alimentaire.

L'invention concerne plus précisément un récipient comprenant une paroi en verre délimitant une cavité d'accueil pour une substance fluide, ledit récipient comprenant en outre un revêtement de protection et de rétention qui recouvre extérieurement au moins une fraction de ladite paroi en verre.

L'invention concerne également un kit de fabrication d'un revêtement de protection et de rétention destiné à recouvrir extérieurement au moins une fraction d'une paroi en verre d'un récipient.

L'invention concerne enfin un procédé de fabrication d'un récipient, dans lequel on fabrique ou on fournit une paroi en verre délimitant une cavité d'accueil pour une substance fluide, ledit procédé comprenant une étape de recouvrement extérieur d'au moins une fraction de ladite paroi en verre par un revêtement de protection et de rétention.

Il est connu de recourir à des récipients en verre pour contenir des produits liquides, en particulier dans le secteur pharmaceutique, mais également dans d'autres secteurs (secteur cosmétique et notamment parfumerie, secteur alimentaire, etc.). Le verre s'avère en effet être un matériau particulièrement adapté pour le stockage de produits à usage pharmaceutique ou à usage vétérinaire, du fait de son caractère relativement neutre qui permet d'éviter ou de limiter les interactions avec le produit contenu dans le récipient, de sa robustesse, de sa transparence (qui permet un contrôle visuel du contenu) et de sa stabilité mécanique et chimique. Ces différentes qualités sont également recherchées dans des secteurs autres que le secteur pharmaceutique, par exemple dans le domaine cosmétique, où l'utilisation de verre pour la réalisation de flacons à parfum est particulièrement prisé, compte tenu du caractère noble généralement prêté au verre par les consommateurs et des qualités précitées de transparence, de robustesse et de stabilité de ce matériau, ou encore dans le domaine alimentaire.

Le verre n'en présente pas moins certains inconvénients qui peuvent entraîner des conséquences particulièrement dommageables. Ainsi, l'un des inconvénients majeurs du verre est son caractère fragile. En cas de choc, par exemple du fait d'une chute du récipient (lequel peut par exemple consister en un flacon renfermant un médicament à perfuser ou à injecter), le verre peut facilement se briser en de multiples morceaux de différentes tailles projetés en tous sens, qui peuvent être coupants et pointus, avec tous les risques que cela présente pour le personnel en charge de la manipulation du flacon concerné (personnel hospitalier par exemple) et les personnes qui se trouvent à proximité du récipient lorsqu'il se brise (patient par exemple). Ainsi, en cas de casse d'un récipient en verre, il est nécessaire de procéder à un nettoyage particulièrement minutieux et fastidieux pour être certain d'éliminer tout bris de verre, même de petite taille, qui pourrait blesser une personne marchant dessus ou l'ingérant par inadvertance. En outre, lorsque le récipient en verre se casse, le produit liquide qu'il renferme se répand brutalement à l'extérieur avec généralement des projections et éclaboussures dans un large périmètre. Cela entraîne non seulement la nécessité d'un nettoyage, mais peut également et surtout entraîner un risque pour la santé et la sécurité des personnes à proximité (personnel hospitalier, patient) lorsque le produit contenu dans le flacon en verre est un produit dangereux, tel qu'un médicament cytotoxique.

Afin de remédier à ce problème, il a été proposé d'équiper des flacons pharmaceutiques en verre renfermant un produit cytotoxique d'un suremballage de protection en plastique rigide (polypropylène). Un tel suremballage est destiné à prévenir les chocs auxquels les flacons peuvent être soumis, durant le transport notamment, et permet également aux utilisateurs d'éviter tout contact lors de la manipulation des flacons avec la surface en verre de ces derniers qui pourrait avoir été polluée par la substance cytotoxique contenue dans le flacon au moment du remplissage de ces derniers. La fixation du suremballage au flacon peut être réalisée par différents moyens, comme par exemple grâce à de petits barreaux en plastique ou grâce à un anneau à ailettes fixé sous le col du flacon.

Le recours à de tels suremballages permet certes d'améliorer la sécurité d'utilisation, mais cette dernière est néanmoins loin d'être optimale. Ainsi, le suremballage plastique, du fait de son caractère relativement rigide, ne permet pas un bon amortissement des chocs et peut lui-même se briser. En outre, il ne permet pas forcément de retenir, si le flacon se casse, non seulement les bris de verre mais également le liquide contenu dans le flacon.

On connaît également des récipients de laboratoire en verre recouverts d'un film de polyuréthanne pour en améliorer la résistance aux chocs. Ce film présente toutefois une souplesse relativement limitée, de sorte que son efficacité en matière de résistance aux chocs n'est pas optimale. Ce film ne permet pas en outre d'assurer efficacement la rétention des bris de verre et du liquide contenu dans le récipient si ce dernier se casse (ce qui est acceptable en l'espèce, s'agissant d'un récipient de laboratoire et non d'un récipient destiné à contenir un produit pharmaceutique, et en particulier un produit cytotoxique). Le film en question présente en outre une texture « *martelée* », avec un état de surface légèrement rugueux, qui pourrait favoriser la rétention en surface d'éventuelles matières contaminantes, étant entendu en outre qu'une telle texture n'est pas optimale sur le plan de la stérilisation, notamment en autoclave.

Les objets assignés à l'invention visent en conséquence à porter remède aux inconvénients exposés dans ce qui précède et à proposer un nouveau récipient comprenant une paroi en verre qui, tout en étant stérilisable, y compris par des méthodes induisant des contraintes thermomécaniques élevées, est également particulièrement résistant aux chocs, permet de retenir efficacement les éventuels bris de glace ainsi que le contenu du récipient en cas de casse de ce dernier.

Un autre objet de l'invention vise à proposer un nouveau récipient comprenant une paroi en verre pourvu d'un revêtement de protection et de rétention particulièrement discret et efficace.

Un autre objet de l'invention vise à proposer un nouveau récipient pourvu d'une paroi en verre qui, tout en présentant des propriétés de résistance aux chocs et de rétention optimales, est facile, rapide et sûr à fabriquer.

Un autre objet de l'invention vise à proposer un nouveau récipient pourvu d'une paroi en verre qui, tout en présentant des propriétés de résistance aux chocs et de rétention optimales, se prête particulièrement bien à des opérations de stérilisation, en particulier en autoclave.

Un autre objet de l'invention vise à proposer un nouveau kit de fabrication d'un revêtement de protection et de rétention de conception simple et économique, et qui est particulièrement facile, rapide et sûr à mettre en oeuvre.

Un autre objet de l'invention vise à proposer un nouveau procédé de fabrication permettant d'obtenir de façon simple, rapide et sûre un récipient avec une paroi en verre particulièrement résistant aux chocs et présentant des propriétés de rétention optimale.

Un autre objet de l'invention vise à proposer un nouveau procédé de fabrication d'un récipient avec une paroi en verre qui ne requiert pour sa mise en oeuvre que des moyens industriels simples et standards.

Les objets assignés à l'invention sont atteints à l'aide d'un récipient comprenant une paroi en verre délimitant une cavité d'accueil pour une substance fluide, ledit récipient comprenant en outre un revêtement de protection et de rétention qui recouvre extérieurement au moins une fraction de ladite paroi en verre, ledit récipient étant caractérisé en ce que ledit revêtement de protection et de rétention est un revêtement multicouche sensiblement transparent qui comprend une couche inférieure recouvrant la paroi en verre et une couche supérieure recouvrant ladite couche inférieure, ladite couche inférieure étant formée d'un matériau souple à base de polyuréthane adhérant à ladite paroi en verre tandis que ladite couche supérieure est formée d'un matériau à base de polyuréthane fonctionnalisé par un composé à base d'un fluoropolymère.

Les objets assignés à l'invention sont également atteints à l'aide d'un kit de fabrication d'un revêtement de protection et de rétention multicouche sensiblement transparent destiné à recouvrir extérieurement au moins une fraction d'une paroi en verre d'un récipient, ladite paroi en verre délimitant une cavité d'accueil pour une substance fluide, ledit kit comprenant :
- un premier produit intermédiaire destiné à être appliqué sous la forme d'une première couche sur la paroi en verre, ledit premier produit intermédiaire consistant en une dispersion en phase aqueuse d'un polyuréthane non réactif dont la masse molaire est suffisamment élevée pour que la simple évaporation de la phase aqueuse entraîne la formation, à partir de ladite première couche, d'un film souple adhérant à la paroi en verre ;
- et un deuxième produit intermédiaire en phase aqueuse destiné à être appliqué sous la forme d'une deuxième couche recouvrant ladite première couche, ledit deuxième produit intermédiaire en phase aqueuse incluant au moins un isocyanate et une substance à base d'un fluoropolymère, destinés à réagir ensemble, après application sur ladite première couche dudit deuxième produit intermédiaire, pour former un matériau à base de polyuréthane fonctionnalisé par un composé à base d'un fluoropolymère.

Enfin, les objets assignés à l'invention sont également atteints à l'aide d'un procédé de fabrication d'un récipient, dans lequel on fabrique ou on fournit une paroi en verre délimitant une cavité d'accueil pour une substance fluide, ledit procédé comprenant une étape de recouvrement extérieur d'au moins une fraction de ladite paroi en verre par un revêtement de protection et de rétention, ledit procédé étant caractérisé en ce que ledit revêtement de protection et de rétention est un revêtement multicouche sensiblement transparent qui comprend une couche inférieure recouvrant la paroi en verre et une couche supérieure recouvrant ladite couche inférieure, ladite couche inférieure étant formée d'un matériau souple à base de polyuréthane adhérant à ladite paroi en verre tandis que ladite couche supérieure est formée d'un matériau à base de polyuréthane fonctionnalisé par un composé à base d'un fluoropolymère.

D'autres objets et avantages de l'invention apparaîtront mieux à la lecture de la description qui suit, ainsi qu'à l'aide de la figure annexée, donnée à titre purement illustratif et non limitatif, et qui illustre, selon une vue schématique en coupe, un exemple de récipient conforme à l'invention, constitué en l'espèce par un flacon destiné à accueillir un produit pharmaceutique liquide, ledit flacon étant en l'occurrence fermé par un bouchon.

Selon un premier aspect, l'invention concerne un récipient 1 comprenant une paroi en verre 2 délimitant une cavité d'accueil 3 pour une substance fluide, c'est-à-dire une substance susceptible de s'écouler comme par exemple une substance liquide, pâteuse (tel qu'un liquide avec un degré de viscosité élevé) ou pulvérulente. De préférence, le récipient 1 forme un récipient conçu pour contenir une substance liquide de nature pharmaceutique, comme par exemple un médicament, et en particulier un médicament cytotoxique, destiné éventuellement à être injecté par voie intraveineuse ou intramusculaire, ou à être administré par perfusion ou encore à être ingéré par un patient.

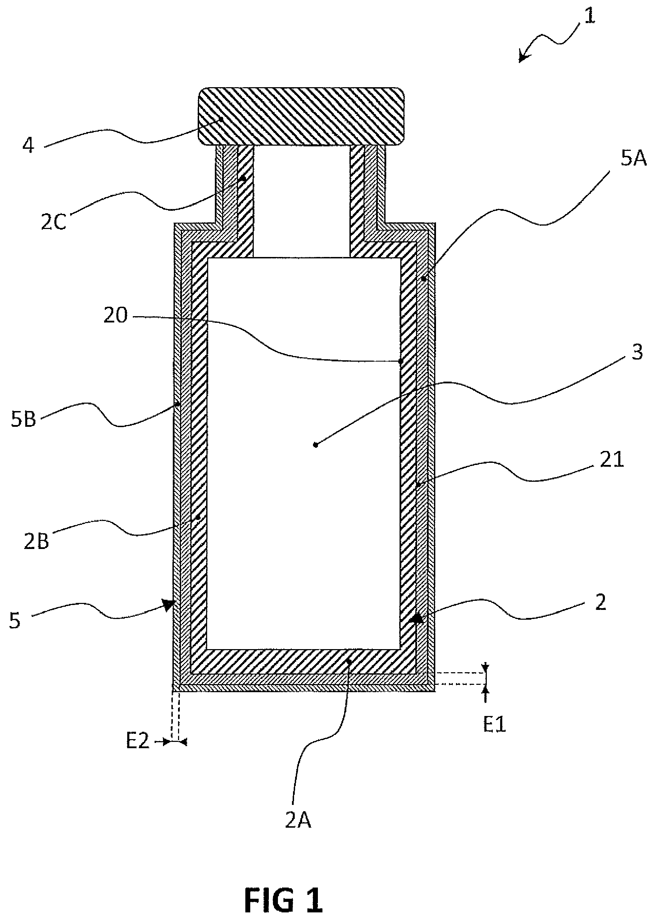

Même si l'application au domaine pharmaceutique est préférée, l'invention n'est toutefois pas limitée à des récipients à usage pharmaceutique et concerne également, à titre de variante alternative, un récipient 1 conçu pour contenir une substance liquide à usage vétérinaire, ou bien une substance liquide à usage alimentaire, ou encore une substance liquide à usage cosmétique (parfum corporel, crème ou autres). De manière générale, le récipient 1 est donc avantageusement destiné à contenir, dans sa cavité d'accueil 3, une substance destinée à être administrée à un être humain ou un animal. Le récipient 1 peut donc présenter toute forme adaptée à sa fonction, et se présenter par exemple, comme illustré à la figure 1, sous la forme d'un flacon, destiné par exemple à contenir un produit liquide à usage pharmaceutique. Dans ce cas, la paroi en verre 2 est formée avantageusement par un fond 2A en verre, une paroi latérale 2B en verre qui s'élève à partir et à la périphérie du fond 2A et un goulot 2C qui ferme le flacon tout en ménageant une ouverture de remplissage/distribution permettant de mettre en communication la cavité 3 avec l'extérieur. Ladite ouverture est éventuellement fermée par un bouchon amovible 4, comme illustré à la figure 1. Il est cependant parfaitement envisageable que le récipient 1 affecte toute autre forme, et en particulier une forme dépourvue de col comme par exemple une forme de tube, d'ampoule, de seringue, ou autre, en fonction de l'usage visé. Un tel récipient en verre, et en particulier en forme de flacon, peut être obtenu par tout procédé verrier classique (verre moulé, verre étiré, procédé Vello ou procédé Danner, etc.).

De préférence, la paroi en verre 2 du récipient 1 délimitant la cavité d'accueil 3 se présente sous la forme d'une pièce d'un seul tenant qui forme à la fois le fond 2A, la paroi latérale 2B et le goulot 2C, de sorte que la cavité d'accueil 3 est avantageusement entièrement délimitée par une pièce monobloc en verre, à l'exception éventuelle du bouchon 4. il est cependant parfaitement envisageable que seule une portion du récipient 1 (par exemple uniquement la paroi latérale 2B) soit réalisée en verre. Plus précisément et comme illustré par la figure 1, la paroi 2 en verre présente une face interne 20 située en regard de la cavité d'accueil 3 et une face externe 21 opposée. La paroi 2 en verre forme ainsi avantageusement un corps creux et vide dont la face interne 20 délimite directement la cavité 3, laquelle forme un volume intérieur vide entièrement fermé, à l'exception de l'ouverture vers l'extérieur ménagée au niveau du goulot 2C dont la section est en l'espèce réduite par rapport à la section moyenne de la cavité 3 (figure 1).

Le terme « *verre* » doit être ici compris dans son acception classique, et désigne donc un verre minéral, et de préférence un verre de silice. Par exemple, le verre constituant la paroi 2 est un verre blanc, transparent, tel qu'un verre sodocalcique ou un verre borosilicate. Le verre employé pour réaliser la paroi 2 est de préférence incolore, mais peut alternativement être coloré, par exemple par des oxydes métalliques, pour protéger la substance fluide contenue au sein du récipient 1 des effets de la lumière, en particulier dans certaines plages de longueur d'onde.

Le récipient 1 comprend en outre un revêtement 5 de protection et de rétention qui recouvre extérieurement au moins une fraction, et de préférence sensiblement la totalité, de la paroi en verre 2. Dans l'exemple avantageux illustré aux figures, le revêtement 5 recouvre ainsi sensiblement continûment et uniformément la face externe 21 tant au niveau du fond 2A que de la paroi latérale 2B et du fond 2C, de sorte que le flacon illustré à la figure 1 est en l'espèce entièrement revêtu sur sa face externe 21, laquelle n'est donc sensiblement plus accessible de l'extérieur.

Le revêtement 5 de protection et de rétention vise à assurer différentes fonctions, et en particulier les fonctions suivantes :
- fonction de protection contre les chocs, afin d'augmenter la résistance aux chocs du récipient 1, le revêtement 5 jouant à cet effet le rôle d'une enveloppe protectrice amortissante « *anti-casse* » ;
- fonction de rétention en cas de casse de la paroi en verre 2, par exemple à la suite d'une chute du récipient 1, cette fonction de rétention visant à ce que le revêtement 5 forme une enveloppe retenant en son sein à la fois les bris de verre et la substance fluide qui était présente au sein du récipient 1.

De préférence, le revêtement 5 assure également une fonction de renforcement de la paroi en verre 2, notamment en remplissant les microfissures potentiellement présentes à la surface de la paroi en verre 2.

Le revêtement 5 de protection de rétention est un revêtement multicouche, c'est-à-dire qu'il est formé d'au moins deux couches superposées. Dans le mode de réalisation préférentiel illustré, le revêtement 5 est constitué de deux couches. Il est cependant parfaitement envisageable que le revêtement 5 comprenne plus de deux couches, et par exemple trois ou quatre couches, ou plus. Le revêtement 5 est également de préférence sensiblement transparent, afin de permettre en particulier un contrôle visuel du contenu du récipient 1, notamment lorsqu'il s'agit d'un produit à usage pharmaceutique conformément au mode de réalisation préférentiel. Cela signifie que les différentes couches composant le revêtement 5 sont chacune individuellement transparentes, afin que la structure multicouche résultante formant le revêtement 5 soit elle-même sensiblement transparente, ou du moins suffisamment transparente pour permettre une inspection visuelle du contenu de la cavité d'accueil 3.

Comme illustrée à la figure 1, le revêtement 5 comprend une couche inférieure 5A qui recouvre la paroi en verre 2. Dans le mode de réalisation préférentiel illustré par la figure 1, la couche inférieure 5A recouvre directement la paroi en verre 2, c'est-à-dire qu'elle vient au contact direct de la paroi en verre 2, et en particulier de la face externe 21 de cette dernière, sans que ne soit interposée entre la couche inférieure 5A et ladite paroi en verre 2 (et en particulier la face externe 21 de ladite paroi en verre 2) une quelconque couche intermédiaire. Dans ce cas la couche inférieure 5A adhère donc, de préférence par elle-même et directement (sans couche de colle ni couche primaire intermédiaire) à la face externe 21 de la paroi en verre 2, et en l'espèce à la face externe 21 de cette dernière.

Le revêtement 5 comprend également une couche supérieure 5B qui recouvre la couche inférieure 5A, c'est-à-dire qui est superposée sur et contre ladite couche inférieure 5A de telle sorte que cette dernière est interposée entre la paroi en verre 2 d'une part et la couche supérieure 5B d'autre part. Dans le mode de réalisation préférentielle illustrée à la figure 1, le revêtement 5 est un revêtement bicouche, la couche inférieure 5A adhérant directement à la paroi en verre 2 tandis que la couche supérieure 5B forme la couche superficielle du revêtement 5.

Conformément à l'invention, la couche inférieure 5 est formée d'un matériau souple à base de polyuréthane adhérant à la paroi 2 en verre, de préférence directement comme exposé ci-avant. Le matériau souple en question est avantageusement majoritairement formé d'un polyuréthane, et de préférence sensiblement intégralement constitué d'un polyuréthane choisi pour ses qualités d'adhérence au verre, son caractère souple (qui permet un bon effet d'amortissement et une protection contre les chocs), ainsi que sa résistance mécanique qui permet d'assurer la rétention à la fois des éventuels bris de glace résultant de la casse de la paroi en verre 2 et de la substance fluide contenue dans le récipient 1.

De préférence, le matériau souple formant ladite couche inférieure 5A est obtenu par séchage d'un premier produit intermédiaire consistant en une dispersion en phase aqueuse d'un matériau polymérisé (polyuréthane) non réactif (c'est-à-dire déjà entièrement polymérisé) dont la masse molaire est suffisamment élevée (par exemple au moins égale à 200 000 g.mol⁻¹, et de façon encore plus préférentielle au moins égale à 300 000 g.mol⁻¹) pour que la simple évaporation de la phase aqueuse résultant dudit séchage entraîne la formation d'un film formant la couche inférieure 5A. En d'autres termes, la couche inférieure 5A est obtenue de préférence exclusivement par séchage du premier produit intermédiaire une fois ce dernier déposé sous forme de couche à la surface de la paroi en verre 2, avantageusement sans qu'aucune réaction, et en particulier de polymérisation ou de réticulation, n'intervienne après dépôt dudit premier produit intermédiaire sur la paroi en verre 2. Avantageusement, la seule évaporation de la phase aqueuse au sein de laquelle est dispersé le matériau polymérisé suffit pour former un film cohésif qui adhère directement sur la face externe 21 de la paroi en verre 2 et forme ainsi la couche inférieure 5A. Le premier produit intermédiaire ne contient donc pas de produits réactifs, du type isocyanate, mais inclut directement le polymère déjà complètement polymérisé et dispersé en phase aqueuse. De préférence, ladite dispersion formant le premier produit intermédiaire est une émulsion aqueuse du matériau polymérisé, c'est-à-dire que des particules liquides ou semi-liquides dudit polymère à base de PU sont dispersées dans de l'eau, ce qui permet notamment de faciliter le processus d'application, notamment au moyen d'outils de pulvérisation. L'invention n'est cependant pas limitée à la mise en oeuvre d'une émulsion aqueuse, et il est par exemple tout à fait envisageable que le matériau polymérisé se présente sous la forme d'une suspension de particules solides de polymère dans de l'eau, voire même d'une solution dudit polymère dans de l'eau. La mise en oeuvre d'un polyuréthane déjà polymérisé, en phase aqueuse, permet donc de faciliter l'application et l'obtention de la couche inférieure 5A et de réduire les risques des opérateurs, s'agissant d'une phase aqueuse.

La couche supérieure 5B est quant à elle formée d'un matériau à base de polyuréthane fonctionnalisé par un composé à base d'un fluoropolymère, pour notamment permettre au revêtement d'être suffisamment hydrophobe superficiellement afin de permettre la stérilisation, et en particulier la stérilisation en autoclave, du récipient 1.

De préférence, le fluoropolymère vient donc avantageusement modifier la nature d'un ou plusieurs groupements portés par les chaînes polymères d'un matériau à base de polyuréthane afin de conférer à ce dernier des propriétés spécifiques.

La couche supérieure 5B assure ainsi différentes fonctions, et vise notamment à protéger la couche inférieure 5A, à préserver l'adhésion de cette dernière à la paroi en verre 2 (en empêchant en particulier la réaction de l'eau avec la couche inférieure 5A, ce qui permet d'éviter notamment un « *gonflement* » de la couche inférieure 5A sous l'effet de l'eau qui pourrait conduire à une perte de cohésion avec la paroi 2 en verre) et à permettre au récipient 1 ainsi revêtu de pouvoir être stérilisé, y compris au moyen de techniques agressives telles que la stérilisation en autoclave à 121 °C, conformément aux normes en vigueur dans le domaine pharmaceutique.

En particulier, dans le cas où la couche inférieure 5A est obtenue exclusivement par séchage d'un premier produit intermédiaire consistant en une dispersion en phase aqueuse d'un matériau déjà polymérisé, sans réaction ultérieure de polymérisation ou de réticulation, le film cohésif obtenu présente un caractère élastique et souple qui permet une bonne protection aux chocs et une rétention efficace des éclats de verre et du liquide en cas de casse de la paroi 2 en verre.

Un additif de réticulation de type silane pourrait être ajouté au premier produit intermédiaire, pour réticuler le matériau polymérisé après dépôt sur la paroi 2 en verre. Cela permettrait d'améliorer l'adhérence, la résistance chimique et la résistance hydrolytique. En revanche, une telle réticulation aurait également tendance à rendre le film formant la couche inférieure 5A cassant, ce qui dégraderait par conséquent fortement ses propriétés de rétention. L'invention repose donc notamment, dans le mode préférentiel de réalisation décrit précédemment, sur l'idée de se passer d'une polymérisation ou réticulation post-dépôt, et de compenser les effets défavorables de cette absence de polymérisation ou réticulation par la mise en oeuvre de la couche supérieure 5B qui protégera la couche inférieure 5A, laquelle est notamment susceptible d'être vulnérable à la stérilisation.

Grâce au fait que le matériau formant la couche supérieure 5B est à base de polyuréthane, la couche supérieure 5B peut adhérer efficacement et naturellement à la couche inférieure 5A qui est également à base de polyuréthane. En plus de cette compatibilité entre les couches inférieures 5A et supérieure 5B, obtenue par la présence commune de polyuréthane dans les deux couches 5A, 5B en question, la composition de la couche supérieure 5B favorise un comportement optimal du récipient 1 à la stérilisation, et en particulier la stérilisation par autoclave. En effet, la fonctionnalisation par un fluoropolymère, et en particulier par un fluoropolymère qui est le polytétrafluoroéthylène (PTFE), permet de conférer au revêtement 5 un caractère hydrophobe en surface, une résistance au blocage élevé ainsi qu'un caractère particulièrement lisse. Ces différentes propriétés permettent au revêtement 5 de subir les contraintes inhérentes aux opérations de stérilisation, que ces dernières soient de nature physique (en autoclave à 121°C, ou à l'eau bouillante, ou par micro-ondes) ou chimique (stérilisation chimique à froid). La résistance au blocage permet en particulier, lorsque plusieurs flacons disposés côte à côte et au contact les uns des autres sont stérilisés en même temps, d'éviter une adhésion intempestive des récipients les uns aux autres sous l'effet des contraintes physico-chimiques induites par la stérilisation.

De préférence, ledit matériau formant la couche supérieure 5B comprend le produit réactionnel d'un isocyanate avec au moins une substance à base d'un fluoropolymère. Plus précisément, la couche supérieure 5B est avantageusement obtenue par polymérisation d'un deuxième produit intermédiaire en phase aqueuse incluant au moins ledit isocyanate et ladite substance à base d'un fluoropolymère, d'autres composants pouvant bien entendu être présents par ailleurs (tel qu'un alcool pour réagir avec l'isocyanate et former du polyuréthane). Le deuxième produit intermédiaire est donc déposé sur la couche supérieure 5B, puis ses composants co-réagissent pour former un polymère à base de polyuréthane fonctionnalisé par un fluoropolymère, qui est de préférence le polytétrafluoroéthylène (PTFE). L'emploi de PTFE permet d'obtenir une excellente résistance au blocage de la couche supérieure 5B, tandis que le recours à un isocyanate précurseur du polyuréthane permet d'assurer la compatibilité et donc l'adhésion de la couche de surface formée en l'occurrence par la couche supérieure 5B avec la sous-couche (couche inférieure 5A) à base de polyuréthane. Le deuxième produit intermédiaire constitue ainsi avantageusement un vernis de protection en phase aqueuse qui une fois appliqué sur la sous-couche formée par la couche inférieure 5A réagit pour former un polymère à base de polyuréthane fonctionnalisé par un fluoropolymère, permettant d'obtenir en surface du revêtement 5 une couche lisse homogène et continue avec une excellente résistance au blocage, qui autorise la stérilisation du récipient 1 sans dégradation significative ou permanente du revêtement 5.

Avantageusement, ledit isocyanate est un isocyanate bloqué, de préférence au moyen d'un agent de blocage adapté (par exemple un agent de blocage permettant à l'isocyanate bloqué d'être soluble dans l'eau). Ceci permet notamment de pouvoir aisément conserver le deuxième produit intermédiaire et de le stocker au cours du temps, tout en permettant à l'isocyanate en question de rester réactif et de polymériser lorsque les conditions requises sont réunies (par exemple lorsque la température est suffisante). De préférence, le deuxième produit intermédiaire est exempt de tout isocyanate libre et comprend uniquement un (ou plusieurs) isocyanate bloqué.

Lesdites couche inférieure 5A et couche supérieure 5B sont préférentiellement de compositions différentes, c'est-à-dire que les matériaux formant respectivement la couche inférieure 5A et la couche supérieure 5B ne sont pas strictement identiques d'un point de vue de leurs compositions chimiques et/ou de leurs structures. En particulier, alors que la couche supérieure 5B est, comme décrit ci-avant, formée d'un matériau à base de polyuréthane fonctionnalisé par un composé à base d'un fluoropolymère, ladite couche inférieure 5A est quant à elle avantageusement dépourvue de tout composé fluoré. Plus spécifiquement, le matériau à base de polyuréthane formant la couche inférieure 5A n'est de préférence pas fonctionnalisée par un composé à base d'un fluoropolymère. La compatibilité entre lesdites couches inférieure 5A et couche supérieure 5B est ainsi encore améliorée, la couche supérieure 5B pouvant dès lors venir parfaitement adhérer à la couche inférieure 5A, ce qui permet de limiter sensiblement les risques de délaminage ou de décollement desdites couche inférieure 5A et couche supérieure 5B.

L'invention permet ainsi, en particulier dans son mode de réalisation avantageux décrit dans ce qui précède et illustré par la figure 1, d'obtenir un récipient 1 particulièrement adapté à un usage pharmaceutique (puisque résistant aux contraintes de la stérilisation) tout en étant particulièrement résistant aux chocs et en présentant une aptitude à la rétention des bris de verre et liquide remarquables.

Avantageusement, l'épaisseur de la couche inférieure 5A est supérieure à celle de la couche supérieure 5B. La couche inférieure 5A est en effet notamment destinée à amortir les chocs et à assurer une fonction de rétention d'éventuels bris de verre et de fluide, ces différentes fonctions nécessitant une épaisseur suffisamment importante de la couche inférieure 5A. À l'inverse, la couche supérieure 5B assure avant tout une protection de la couche inférieure 5A et peut donc de ce fait présenter une épaisseur moindre.

De préférence, l'épaisseur E1 de la couche inférieure 5A est sensiblement comprise entre 30 et 300 µm. Dans un mode de réalisation particulièrement avantageux, l'épaisseur E1 de la couche inférieure 5A est sensiblement comprise entre 50 et 200 µm, de façon encore plus préférentielle sensiblement égale à 100 µm. Les plages d'épaisseur précitées, qui peuvent bien sûr être adaptées en fonction des caractéristiques du récipient 1 à revêtir, et en particulier de la taille et du poids de ce dernier, permettent d'obtenir une protection optimale contre les chocs et garantissent une tenue mécanique suffisante de la couche inférieure 5A pour assurer la rétention éventuelle de bris de verre et/ou de produits fluides.

Avantageusement, l'épaisseur E2 de la couche supérieure 5B est sensiblement comprise entre 5 et 50 µm, et de façon encore plus préférentielle sensiblement comprise entre 10 et 30 µm, de préférence sensiblement égale à 20 µm. Par exemple, pour un flacon dont la contenance est de 100 ml et de masse égale à 89 g, une épaisseur E1 de la couche inférieure 5A avantageusement égale à sensiblement 100 µm permettra d'obtenir de bons résultats en matière de protection contre les chocs et de rétention.

L'invention concerne par ailleurs en tant que tel un kit de fabrication d'un revêtement 5 de protection et de rétention multicouche sensiblement transparent, ledit revêtement 5 étant de préférence conforme à la description qui précède et donc destiné à recouvrir extérieurement au moins une fraction d'une paroi en verre 2 d'un récipient 1, délimitant une cavité d'accueil 3 pour une substance fluide, conformément à la description qui précède.

Le kit objet de l'invention comprend :
- un premier produit intermédiaire, destiné à être appliqué sous la forme d'une première couche sur la paroi en verre 2, ledit premier produit intermédiaire consistant avantageusement en une dispersion en phase aqueuse d'un polyuréthane non réactif dont la masse molaire est suffisamment élevée pour que la simple évaporation de la phase aqueuse entraîne la formation, à partir de ladite première couche, d'un film souple adhérent à la paroi en verre 2 ;
- et un deuxième produit intermédiaire en phase aqueuse destiné à être appliqué sous la forme d'une deuxième couche recouvrant ladite première couche, ledit deuxième produit intermédiaire en phase aqueuse incluant au moins un isocyanate (de préférence bloqué) et une substance à base de fluoropolymère (de préférence le polytétrafluoroétylène ou PTFE), destinés à réagir ensemble, après application sur ladite première couche dudit deuxième produit intermédiaire, pour former un matériau à base de polyuréthane fonctionnalisé par un composé à base d'un fluoropolymère.

Avantageusement, lesdits premier et deuxième produits intermédiaires susvisés sont conformes à la description détaillée exposée dans ce qui précède en relation avec le récipient 1 conforme à l'invention, de sorte que ladite description s'applique également intégralement au kit selon l'invention.

A ce titre, lesdits premier et deuxième produits intermédiaires sont préférentiellement de compositions différentes, c'est-à-dire que leurs formulations chimiques ne sont pas strictement identiques, et ce bien que lesdits premier et deuxième produits intermédiaires soient tous deux destinés à permettre la formation de couches d'un matériau à base de polyuréthane. En particulier, alors que ledit deuxième produit intermédiaire inclut, comme décrit ci-avant, une substance à base de fluoropolymère, ledit premier produit intermédiaire est quant à lui avantageusement dépourvu de tout composé fluoré. Plus spécifiquement, ledit premier produit intermédiaire n'inclut avantageusement aucune substance à base de fluoropolymère, de sorte que ledit film souple obtenu grâce à la mise en oeuvre dudit premier produit intermédiaire est formé d'un matériau à base de polyuréthane qui n'est préférentiellement pas fonctionnalisé par un composé à base d'un fluoropolymère.

Selon encore un autre aspect, l'invention concerne un procédé de fabrication d'un récipient 1, dans lequel on fabrique ou on fournit une paroi en verre 2 délimitant une cavité d'accueil 3 pour une substance fluide. Le procédé en question est avantageusement un procédé de fabrication d'un récipient 1 conforme à l'invention, de sorte que la description exposée dans ce qui précède en relation avec le récipient 1 selon l'invention reste valable et applicable, *mutatis mutandis*, au présent procédé. Ce dernier comprend une étape de recouvrement extérieur d'au moins une fraction de la paroi en verre 2 par un revêtement 5 de protection et de rétention. Comme exposé précédemment, le revêtement 5 de protection et de rétention est un revêtement multicouche sensiblement transparent qui comprend une couche inférieure 5A recouvrant la paroi en verre 2 et une couche supérieure 5B recouvrant ladite couche inférieure 5A, ladite couche inférieure 5A étant formée d'un matériau souple à base de polyuréthane adhérant à la paroi en verre 2 tandis que la couche supérieure 5B est formée d'un matériau à base de polyuréthane fonctionnalisé par un composé à base d'un fluoropolymère, pour notamment permettre au revêtement d'être suffisamment hydrophobe superficiellement afin de permettre la stérilisation, et en particulier la stérilisation en autoclave, du récipient 1.

Au cours de ladite étape de recouvrement, ladite couche inférieure 5A vient de préférence recouvrir directement la paroi en verre 2, sans couche intermédiaire entre ladite paroi en verre 2 et ladite couche inférieure 5A. La couche inférieure 5A vient donc ainsi au contact direct de la paroi en verre 2, et en particulier au contact direct de la face externe 21 de cette dernière, sans que ne soit interposée entre la couche inférieure 5A et ladite paroi en verre 2 une quelconque couche intermédiaire. La couche inférieure 5A vient ainsi avantageusement adhérer, de préférence par elle-même et directement (sans couche de colle ni couche primaire intermédiaire) à la face externe 21 de la paroi en verre 2.

En outre, et comme déjà exposé ci-avant, lesdites couche inférieure (5A) et couche supérieure 5B du revêtement 5, dont au moins une fraction de la paroi en verre 2 du récipient 1 est recouvert au cours de cette étape de recouvrement, sont de compositions différentes, c'est-à-dire que les matériaux formant respectivement la couche inférieure 5A et la couche supérieure 5B ne sont pas strictement identiques d'un point de vue de leurs compositions chimiques et/ou de leurs structures. En particulier, alors que la couche supérieure 5B est, comme décrit ci-avant, formée d'un matériau à base de polyuréthane fonctionnalisé par un composé à base d'un fluoropolymère, ladite couche inférieure 5A est quant à elle avantageusement dépourvue de tout composé fluoré. Plus spécifiquement, le matériau à base de polyuréthane formant la couche inférieure 5A n'est de préférence pas fonctionnalisé par un composé à base d'un fluoropolymère. Ceci permet avantageusement d'améliorer encore la compatibilité entre lesdites couche inférieure 5A et couche supérieure 5B, la couche supérieure 5B pouvant dès lors venir parfaitement adhérer à la couche inférieure 5A, ce qui permet de limiter sensiblement les risques de délaminage ou de décollement desdites couche inférieure 5A et couche supérieure 5B.

Avantageusement, ladite étape de recouvrement comprend elle-même une étape de formation de la couche inférieure 5A au cours de laquelle :
- un premier produit intermédiaire consistant en une dispersion en phase aqueuse d'un matériau polymérisé non réactif est appliqué sur la paroi en verre 2, sous la forme d'une première couche, par exemple par pulvérisation. Le premier produit intermédiaire, qui est avantageusement conforme à la description qui précède exposée en relation avec le récipient 1 conforme à l'invention, peut être déposé sur la paroi 2 en verre alors que celle-ci est à température ambiante ou au contraire a subi un préchauffage de sorte que sa température est supérieure à la température ambiante. De préférence, la paroi en verre 2 est traitée par corona ou plasma avant l'application du premier produit intermédiaire, afin d'en améliorer la mouillabilité et l'adhésion. Le premier produit intermédiaire peut par exemple être appliqué par une technique de pulvérisation électrostatique au bol ou au disque, ce qui s'avère particulièrement avantageux sur le plan du coût et de l'industrialisation, mais une application au pistolet pneumatique pourrait également parfaitement convenir, étant entendu que l'invention ne se limite en aucun cas à une technique particulière d'application.
- Le premier produit intermédiaire ainsi appliqué, de préférence sous la forme d'une première couche homogène, continue et uniforme, sur la paroi en verre 2, est alors séché, par exemple à l'air libre ou de manière forcée (par apport de chaleur et/ou soumission à un flux d'air), de manière à faire évaporer la phase aqueuse (opération de désolvatation, qui peut être effectuée après dépose de la deuxième couche évoquée ci-après), la masse molaire dudit matériau polymérisé étant suffisamment élevée pour que la simple évaporation de la phase aqueuse résultant dudit séchage entraîne la formation d'un film formant la couche inférieure 5A, comme exposé dans ce qui précède.

Comme exposé précédemment en relation avec la description du récipient 1 selon l'invention, le matériau polymérisé dispersé en phase aqueuse pour former le premier produit intermédiaire a déjà réagi, et n'est donc plus réactif, c'est-à-dire qu'il est déjà polymérisé et ne subira pas, après application du premier produit intermédiaire sur la paroi en verre 2, de réaction ultérieure, en particulier de polymérisation ou de réticulation.

De préférence, le film souple et cohésif formant la couche inférieure 5A est donc obtenu uniquement par évaporation de la phase aqueuse du premier produit intermédiaire, sans que ne soit mise en oeuvre, après application du premier produit intermédiaire sur la paroi 2 en verre, une réaction ultérieure de polymérisation ou de réticulation, ce qui permet d'obtenir une enveloppe suffisamment souple pour assurer un bon amortissement aux chocs et une rétention efficace des bris de verre et du liquide, au détriment éventuellement des propriétés de résistance aux produits chimiques et à l'eau, et donc à la stérilisation. Cette vulnérabilité est toutefois surmontée au moyen de la couche supérieure 5B, comme exposé précédemment, et dont les modalités préférentielles de formation seront exposées dans ce qui suit.

De préférence, la dispersion en phase aqueuse formant le premier produit intermédiaire est une émulsion aqueuse dudit matériau polymérisé, de sorte que des particules liquides ou semi-liquides de ce dernier sont dispersées dans une phase aqueuse. Comme rappelé ci-avant, l'invention n'est cependant pas limitée à la mise en oeuvre d'une émulsion et la dispersion en question pourrait tout à fait consister en une suspension ou une solution par exemple. Le recours à une émulsion s'avère toutefois avantageux en matière d'industrialisation et de technique d'application du premier produit intermédiaire, notamment par pulvérisation.

Avantageusement, le premier produit intermédiaire présente une viscosité à 20°C qui est comprise entre sensiblement 800 et 2 000 mPa.s, de préférence entre sensiblement 1 000 et 1 800 mPa.s, ce qui permet d'appliquer aisément le premier produit intermédiaire sur la paroi en verre 2 en une couche mince, homogène et uniforme, notamment au moyen d'instruments de pulvérisation comme évoqué précédemment. À cette fin, il est particulièrement avantageux que le premier produit intermédiaire présente une viscosité à 20°C qui soit comprise entre sensiblement 1 300 et 1 400 mPa.s.

Avantageusement, le premier produit intermédiaire présente un extrait sec compris entre 20 et 70 % en poids, et de préférence compris entre 30 et 60 % en poids, de façon encore plus préférentielle entre 45 et 55 % en poids, de façon à permettre, par simple évaporation de la phase aqueuse, l'obtention d'un film homogène et cohésif destiné à former la couche inférieure 5A et à adhérer à cette fin directement à la paroi en verre 2. Dans un mode de réalisation particulièrement préféré, le premier produit intermédiaire présente un extrait sec égal à 48 % en poids.

De façon préférentielle, le premier produit intermédiaire est déposé à la surface de la paroi en verre 2 sous la forme d'une première couche dont l'épaisseur est choisie pour qu'après séchage du premier produit intermédiaire et évaporation de la phase aqueuse, l'épaisseur de la couche inférieure 5A résultante soit sensiblement comprise entre 30 et 300 µm, de préférence entre 50 et 200 µm, et de façon encore plus préférentielle sensiblement égale à 100 µm, comme évoqué précédemment en relation avec la description du récipient 1 conforme à l'invention.

Avantageusement, afin de protéger la couche inférieure 5A, l'étape de recouvrement susvisé comprend également une étape de formation de la couche supérieure 5B au cours de laquelle :
- un deuxième produit intermédiaire en phase aqueuse incluant au moins un isocyanate (qui est de préférence un isocyanate bloqué pour les raisons exposées dans ce qui précède) et une substance à base d'un fluoropolymère (qui est de préférence le polytétrafluoroétylène (PTFE) pour les raisons exposées également dans ce qui précède), est appliquée sur ladite première couche par exemple immédiatement après application de ladite première couche, lorsque cette dernière est encore humide, ou bien après un temps d'attente (par exemple plusieurs dizaines de minutes) pour une application du deuxième produit intermédiaire sur la première couche sèche. Comme exposé précédemment, ledit deuxième produit intermédiaire présente, de préférence, une composition différente de celle dudit premier produit intermédiaire, c'est-à-dire que les formulations chimiques respectives desdits premier et deuxième produits intermédiaires ne sont pas strictement identiques, ledit premier produit intermédiaire étant avantageusement dépourvu de tout composé fluoré. Le deuxième produit intermédiaire est avantageusement appliqué sur la première couche par des moyens analogues à ceux mis en oeuvre pour appliquer le premier produit intermédiaire, et par exemple par pulvérisation, et en particulier par pulvérisation électrostatique au bol ou au disque (pour autant que la deuxième couche soit appliquée sur la première couche encore humide (application « *mouillée sur mouillée* »), c'est-à-dire contenant encore suffisamment d'eau pour permettre au procédé électrostatique de fonctionner convenablement), une application au pistolet pneumatique pouvant être préférée (en particulier lorsque la deuxième couche est appliquée après séchage complet de la première couche qui est alors déjà entièrement désolvatée et forme la couche inférieure 5A).
- Ledit deuxième produit intermédiaire ainsi appliqué, de préférence sous la forme d'une couche mince uniforme et homogène, sur la première couche (humide ou sèche), est ensuite soumis à un traitement qui entraîne la réaction d'au moins ledit isocyanate avec la substance à base de fluoropolymère pour former ledit matériau à base de polyuréthane fonctionnalisé par un composé à base d'un fluoropolymère (avantageusement le PTFE).

En d'autres termes, une fois le deuxième produit intermédiaire appliqué sur la première couche, il se produit au sein dudit deuxième produit intermédiaire une réaction de polymérisation entraînant la transformation du mélange isocyanate/fluoropolymère en un polyuréthane fonctionnalisé par un composé à base dudit fluoropolymère.

Cette réaction peut se produire par exemple spontanément, sous l'effet de l'exposition à l'air libre, en couche mince, du deuxième produit intermédiaire, auquel cas le traitement en question consiste uniquement à laisser à l'air libre le deuxième produit intermédiaire appliqué sur la première couche pour qu'il réagisse spontanément. Alternativement, selon un mode de réalisation préférentiel de l'invention, le traitement entrainant la réaction susvisée est plutôt un traitement thermique permettant d'atteindre une température seuil à partir de laquelle l'isocyanate polymérisera et réagira avec le fluoropolymère. Par exemple, le traitement inclut une étape de cuisson du récipient 1 sur lequel est appliqué ledit deuxième produit intermédiaire, à une température suffisante pour déclencher la réaction susvisée, ladite température étant par exemple comprise entre sensiblement 90°C et 200°C, de préférence entre 120°C et 180°C, de façon encore plus préférentielle entre 142°C et 170°C. Cette étape de cuisson peut être réalisée en four traditionnel à air chaud ou bien par tout autre moyen (chauffage à infrarouges...). Cette étape de cuisson permet ainsi d'obtenir une couche superficielle lisse, avec une excellente résistance au blocage ainsi qu'un caractère hydrophobe, permettant de stériliser le récipient 1, y compris en autoclave.

De préférence, avant de procéder à l'étape de cuisson entrainant la réaction précitée au sein dudit deuxième produit intermédiaire, une étape de désolvatation est mise en oeuvre, notamment si le deuxième produit intermédiaire a été appliqué sur le premier produit intermédiaire encore humide, afin de sécher ainsi à la fois la deuxième couche et (surtout) la première couche. Cette opération peut par exemple durer plusieurs dizaines de minutes notamment si elle est effectuée naturellement à l'air libre, cette durée pouvant être réduite en mettant en oeuvre un brassage de l'air environnant et/ou à une élévation de la température ambiante (inférieure à 100°C toutefois). Il est cependant parfaitement envisageable de procéder à la désolvatation (pendant 15 à 30 min par exemple en fonction des conditions de température et de brassage de l'air) de la première couche avant application de la deuxième couche. Une fois la deuxième couche déposée, on procède alors à une désolvatation (pendant 5 à 10 min par exemple en fonction des conditions de température et de brassage de l'air) de celle-ci puis à une cuisson pour initier la réaction de polymérisation évoquée précédemment.

Avantageusement, le deuxième produit intermédiaire présente une viscosité à 20°C qui est comprise entre sensiblement 5 et 30 mPa.s, de préférence entre sensiblement 10 et 20 mPa.s, afin de faciliter l'application, en particulier par projection et recouvrir aisément, de manière homogène et uniforme, la première couche.

À cette fin, la viscosité à 20°C du deuxième produit intermédiaire est encore plus préférentiellement comprise entre sensiblement 14 et 15 mPa.s.

Avantageusement, le deuxième produit intermédiaire présente un extrait sec compris entre 10 et 60 % en poids, de préférence entre 20 et 50 % en poids, de façon encore plus préférentielle entre 25 et 40 % en poids. Un extrait sec égal par exemple 32 % en poids conduit à d'excellents résultats, tant sur le plan de l'industrialisation que des propriétés du revêtement 5 obtenu.

Avantageusement, le deuxième produit intermédiaire est appliqué sur la première couche de façon que l'épaisseur de la couche supérieure 5B qu'il permet d'obtenir soit sensiblement comprise entre 5 et 50 µm, de préférence sensiblement comprise entre 10 et 30 µm, et de façon encore plus préférentielle sensiblement égale à 20 µm, de façon à protéger efficacement la sous-couche (couche inférieure 5A) sans pour autant constituer une surépaisseur inutile ou gênante.

En définitive, le recours à un revêtement 5 multicouche, et en particulier à un revêtement 5 bicouche avec une sous-couche à fonction essentiellement mécanique (absorption de choc, rétention) recouverte d'un vernis de protection (couche de surface) présentant une très bonne résistance au blocage ainsi qu'un caractère lisse et hydrophobe, formé directement sur la paroi en verre 2 du récipient 1 et adhérant directement à ce dernier, permet d'obtenir de façon simple et industrialisable un récipient 1 parfaitement adapté à un usage pharmaceutique, notamment pour contenir en son sein des produits liquides cytotoxiques (médicaments anticancéreux par exemple).

Les exemples et compte-rendu de tests exposés dans ce qui suit permette de mieux apprécier l'apport pratique de l'invention. Les tests ont été conduits avec des flacons en verre de 100 ml dont une première série de 20 flacons a été recouverte d'un revêtement 5 de protection et de rétention conformément à l'invention, tandis qu'une autre série de flacons identiques (20 flacons de 100 ml également) est restée exempte de revêtement. Les flacons appartenant à la série de flacons conformes à l'invention seront désignés ci-après « *flacon plastifiés* », tandis que les flacons en verre simple, dépourvu de revêtement, seront désignés par l'appellation « *flacons non plastifiés* ».

Le revêtement des flacons plastifiés est un revêtement bicouche avec une épaisseur de couche inférieure 5A sensiblement égale à 100 µm, tandis que la couche supérieure 5B présente une épaisseur sensiblement égale à 30 µm. La couche inférieure 5A est formée d'un polyuréthane adhérant directement à la paroi 2 en verre et est obtenue par séchage d'un premier produit intermédiaire consistant en une émulsion aqueuse d'un matériau à base de polyuréthane déjà entièrement polymérisé, avec un extrait sec sensiblement égal à 48 % en poids, qui inclut 3 à 10 % en masse de co-solvant, de préférence 5 % en masse de co-solvant, et dont la viscosité à 20°C est de préférence comprise entre 1 300 et 1 400 mPa.s. Quant à la couche de surface (couche supérieure 5B), elle est en l'espèce obtenue par cuisson d'un deuxième produit intermédiaire en phase aqueuse appliquée sous la forme d'une deuxième couche recouvrant la première couche destinée à former la couche inférieure 5A, ce deuxième produit intermédiaire en phase aqueuse incluant un isocyanate bloqué et du PTFE, ainsi qu'éventuellement d'autres composés (alcool...) qui réagiront ensemble sous l'effet de la température, et en l'espèce sous l'effet d'un chauffage à une température comprise entre 142°C et 170°C) de façon à obtenir par polymérisation un vernis à base de polyuréthane fonctionnalisé par le PTFE. Le deuxième produit intermédiaire en phase aqueuse présente un extrait sec sensiblement égal à 32 % en poids, ainsi qu'une viscosité de l'ordre de 14 à 15 mPa.s à 20°C.

Les deux séries de flacons susvisées, plastifiés et non plastifiés, sont tout d'abord soumises à des tests de chute, réalisés sur un banc de test dans lequel chaque flacon est positionné verticalement et guidé de façon à chuter sur une plaque en inox, avec une hauteur de chute égale à 1,5 m. Chaque flacon soumis à ce test de chute est rempli à 80 % de sa contenance à ras-bord. Les résultats de ces tests de chute sont les suivants : 40 % (c'est-à-dire 8 flacons sur 20) des flacons plastifiés se sont cassés, alors que 75 % (c'est-à-dire 15 flacons sur 20) des flacons non plastifiés se sont cassés. Le taux de casse est donc bien plus élevé pour les flacons non plastifiés, ce qui confirme que le revêtement 5 contribue à renforcer la paroi en verre 2, notamment semble-t-il en remplissant les microfissures présentes en surface.

Les tests de chute susvisés ont permis en outre de constater que lorsque le flacon casse et qu'il n'est pas plastifié, il explose systématiquement. En revanche, lorsqu'il est plastifié conformément l'invention, les bris de verre sont systématiquement retenus et le flacon garde son intégrité. Avec une épaisseur de revêtement suffisante, le liquide est également retenu.

En l'espèce, les résultats en matière de rétention ont été les suivants : sur les 8 flacons qui se sont cassés, 7 ont retenu à la fois les bris de verre et le liquide, tandis qu'un seul a retenu uniquement les bris de verre.

Enfin, différents tests de stérilisation de flacons revêtus conformément à l'invention ont été menés, et ont permis de conclure que les récipients conformes à l'invention supportent les principaux types de stérilisation, comme exposé dans le tableau 1 ci-après.

**Tableau 1**

| **Stérilisation** | **Conditions** | **Observations** |
|---|---|---|
| | 30min | Léger aplat observé au niveau des zones de contact lorsque les flacons se touchent, en raison d'un ramollissement du PU à la température de 121°C |
| Autoclave | 121°C | |
| | 2 bars | |
| | Présence de vapeur d'eau | |
| Stérilisateur électrique | 5 min dans un stérilisateur électrique pour biberons (vapeur d'eau) | Blanchiment important qui disparaît après quelques minutes à l'ambiante |
| Micro-ondes | 4 min à 850W dans un stérilisateur à micro-ondes pour biberons (vapeur d'eau) | |
| Chimique à froid | 30 min dans une solution d'hypochlorite de soude | Aucune modification / dégradation du revêtement n'est observée |

Dans ce qui précède, il a été décrit un revêtement 5 présentant un aspect visuel homogène. Il est cependant parfaitement envisageable d'introduire par exemple des pigments dans la couche inférieure 5A et/ou dans la couche supérieure 5B, afin d'obtenir un revêtement coloré plus ou moins translucide, ou une protection vis-à-vis des UV. Différents effets et textures peuvent également être recherchés et obtenus, au moyen par exemple de l'inclusion de particules ou paillettes. Le revêtement 5 conforme à l'invention se prête également à l'application sur sa couche supérieure 5B d'un décor, par exemple par sérigraphie ou toute autre technique connue.

Enfin, l'idée de recourir à une simple dispersion en phase aqueuse d'un polyuréthane déjà polymérisé (rendant de ce fait inutile le recours à des catalyseurs) dont la masse molaire est suffisamment élevée pour que la simple évaporation de la phase aqueuse entraine la formation d'un film souple cohésif adhérant à la paroi 2 en verre, constitue une invention en tant que telle.

Dès lors, constitue en tant que tel une invention indépendante un récipient comprenant une paroi en verre délimitant une cavité d'accueil pour une substance liquide, ledit récipient comprenant en outre un revêtement de protection et de rétention qui recouvre extérieurement au moins une fraction de ladite paroi en verre, ledit revêtement de protection et de rétention étant un revêtement multicouche qui comprend d'une part une couche inférieure obtenue par séchage d'un premier produit intermédiaire consistant en une dispersion en phase aqueuse d'un matériau déjà polymérisé (non réactif) à base de polyuréthane dont la masse molaire est suffisamment élevée pour que la simple évaporation de la phase aqueuse résultant dudit séchage entraine la formation d'un film formant ladite couche inférieure et d'autre part une couche supérieure (avec ou sans fluoropolymère) recouvrant ladite couche inférieure pour la protéger.

## Revendications

1. Récipient (1) comprenant une paroi en verre (2) délimitant une cavité d'accueil (3) pour une substance fluide, ledit récipient (1) comprenant en outre un revêtement (5) de protection et de rétention qui recouvre extérieurement au moins une fraction de ladite paroi en verre (2), ledit récipient (1) étant **caractérisé en ce que** ledit revêtement (5) de protection et de rétention est un revêtement multicouche sensiblement transparent qui comprend une couche inférieure (5A) recouvrant la paroi en verre (2) et une couche supérieure (5B) recouvrant ladite couche inférieure (5A), ladite couche inférieure (5A) étant formée d'un matériau souple à base de polyuréthane adhérant à ladite paroi en verre (2) tandis que ladite couche supérieure (5B) est formée d'un matériau à base de polyuréthane fonctionnalisé par un composé à base d'un fluoropolymère.

2. Récipient (1) selon la revendication 1 **caractérisé en ce que** ladite couche inférieure (5A) recouvre directement la paroi en verre (2), sans couche intermédiaire entre ladite paroi en verre (2) et ladite couche inférieure (5A).

3. Récipient (1) selon la revendication 1 ou 2 **caractérisé en ce que** lesdites couche inférieure (5A) et couche supérieure (5B) sont de compositions différentes, ladite couche inférieure (5A) étant préférentiellement dépourvue de tout composé fluoré.

4. Récipient (1) selon l'une quelconque des revendications 1 à 3 **caractérisé en ce que** l'épaisseur (E1) de ladite couche inférieure (5A) est supérieure à celle (E2) de la couche supérieure (5B).

5. Récipient (1) selon l'une quelconque des revendications 1 à 4 **caractérisé en ce que** :
- l'épaisseur (E1) de ladite couche inférieure (5A) est sensiblement comprise entre 30 et 300 µm, de préférence sensiblement comprise entre 50 et 200 µm, et de préférence encore sensiblement égale à 100 µm, et
- l'épaisseur (E2) de ladite couche supérieure (5B) est sensiblement comprise entre 5 et 50 µm, de préférence sensiblement comprise entre 10 et 30 µm, et de préférence encore sensiblement égale à 20 µm.

6. Récipient (1) selon l'une quelconque des revendications 1 à 5 **caractérisé en ce que** ledit matériau souple formant la couche inférieure (5A) est obtenu par séchage d'un premier produit intermédiaire consistant en une dispersion en phase aqueuse d'un matériau polymérisé non réactif dont la masse molaire est suffisamment élevée pour que la simple évaporation de la phase aqueuse résultant dudit séchage entraîne la formation d'un film formant ladite couche inférieure (5A), laquelle dispersion étant de préférence une émulsion aqueuse dudit matériau polymérisé.

7. Récipient (1) selon l'une quelconque des revendications 1 à 6 **caractérisé en ce que** ledit matériau formant la couche supérieure (5B) comprend le produit réactionnel d'un isocyanate avec au moins une substance à base d'un fluoropolymère, ledit isocyanate étant de préférence un isocyanate bloqué et ledit fluoropolymère étant de préférence le polytétrafluoroéthylène PTFE.

8. Récipient (1) selon la revendication 7 **caractérisé en ce que** ledit matériau formant la couche supérieure (5B) est obtenu par polymérisation d'un deuxième produit intermédiaire en phase aqueuse incluant au moins ledit isocyanate et ladite substance à base d'un fluoropolymère,

9. Kit de fabrication d'un revêtement (5) de protection et de rétention multicouche sensiblement transparent destiné à recouvrir extérieurement au moins une fraction d'une paroi en verre (2) d'un récipient (1), ladite paroi en verre (2) délimitant une cavité d'accueil (3) pour une substance fluide, ledit kit comprenant :
- un premier produit intermédiaire destiné à être appliqué sous la forme d'une première couche sur la paroi en verre (2), ledit premier produit intermédiaire consistant en une dispersion en phase aqueuse d'un polyuréthane non réactif dont la masse molaire est suffisamment élevée pour que la simple évaporation de la phase aqueuse entraîne la formation, à partir de ladite première couche, d'un film souple adhérant à la paroi en verre (2) ;
- et un deuxième produit intermédiaire en phase aqueuse destiné à être appliqué sous la forme d'une deuxième couche recouvrant ladite première couche, ledit deuxième produit intermédiaire en phase aqueuse incluant au moins un isocyanate et une substance à base d'un fluoropolymère, destinés à réagir ensemble, après application sur ladite première couche dudit deuxième produit intermédiaire, pour former un matériau à base de polyuréthane fonctionnalisé par un composé à base d'un fluoropolymère.

10. Procédé de fabrication d'un récipient (1), dans lequel on fabrique ou on fournit une paroi en verre (2) délimitant une cavité d'accueil (3) pour une substance fluide, ledit procédé comprenant une étape de recouvrement extérieur d'au moins une fraction de ladite paroi en verre (2) par un revêtement (5) de protection et de rétention, ledit procédé étant **caractérisé en ce que** ledit revêtement (5) de protection et de rétention est un revêtement multicouche sensiblement transparent qui comprend une couche inférieure (5A) recouvrant la paroi en verre (2) et une couche supérieure (5B) recouvrant ladite couche inférieure (5A), ladite couche inférieure (5A) étant formée d'un matériau souple à base de polyuréthane adhérant à ladite paroi en verre (2) tandis que ladite couche supérieure (5B) est formée d'un matériau à base de polyuréthane fonctionnalisé par un composé à base d'un fluoropolymère.

11. Procédé selon la revendication 10 **caractérisé en ce que**, au cours de ladite étape de recouvrement, ladite couche inférieure (5A) vient recouvrir directement la paroi en verre (2), sans couche intermédiaire entre ladite paroi en verre (2) et ladite couche inférieure (5A).

12. Procédé selon la revendication 10 ou 11 **caractérisé en ce que** lesdites couche inférieure (5A) et couche supérieure (5B) dudit revêtement (5) de protection et de rétention sont de compositions différentes, ladite couche inférieure (5A) étant préférentiellement dépourvue de tout composé fluoré.

13. Procédé selon l'une quelconque des revendications 10 à 12 **caractérisé en ce que** ladite étape de recouvrement comprend une étape de formation de ladite couche inférieure (5A) au cours de laquelle :
- un premier produit intermédiaire consistant en une dispersion en phase aqueuse d'un matériau polymérisé non réactif, laquelle dispersion étant de préférence une émulsion aqueuse dudit matériau polymérisé, est appliqué sur la paroi en verre (2), sous la forme d'une première couche, par exemple par pulvérisation,
- ledit premier produit intermédiaire ainsi appliqué sur la paroi en verre (2) est séché, la masse molaire dudit matériau polymérisé étant suffisamment élevée pour que la simple évaporation de la phase aqueuse résultant dudit séchage entraîne la formation d'un film formant ladite couche inférieure (5A).

14. Procédé selon l'une des revendications 10 à 13 **caractérisé en ce que** ladite étape de recouvrement comprend une étape de formation de ladite couche supérieure (5B) au cours de laquelle :
- un deuxième produit intermédiaire en phase aqueuse incluant au moins un isocyanate et une substance à base d'un fluoropolymère est appliqué sur ladite première couche, ledit isocyanate étant de préférence un isocyanate bloqué, ledit fluoropolymère étant de préférence le polytétrafluoroéthylène PTFE,
- ledit deuxième produit intermédiaire ainsi appliqué sur ladite première couche est soumis à un traitement qui entraîne la réaction d'au moins ledit isocyanate avec la substance à base de fluoropolymère pour former ledit matériau à base de polyuréthane fonctionnalisé par un composé à base d'un fluoropolymère.

15. Procédé selon la revendication 14 **caractérisé en ce que** ledit traitement inclut une étape de cuisson dudit récipient (1) sur lequel est appliqué ledit deuxième produit intermédiaire à une température suffisante pour déclencher ladite réaction, ladite température étant par exemple comprise entre sensiblement 90 °C et 200 °C, de préférence entre 120 °C et 180 °C, de façon encore plus préférentielle entre 140 °C et 170 °C.
